# EUROPÄISCHE PATENTSCHRIFT

(11) **EP 1 352 599 B1**
(45) Veröffentlichungstag und Bekanntmachung des Hinweises auf die Patenterteilung: **29.06.2011**
(21) Anmeldenummer: 02008018.0
(22) Anmeldetag: 10.04.2002
(51) Int. Cl.: A47J 31/44, A47J 31/00

(54) **Getränkesystem**
Beverage apparatus
Appareil pour boisson

(43) Veröffentlichungstag der Anmeldung: 15.10.2003
(73) Patentinhaber: WMF WÜRTTEMBERGISCHE METALLWARENFABRIK AG, 73309 Geislingen/Steige (DE)
(72) Erfinder: Banzhaf, Jochen, 73312 Geislingen (DE); Bührle, Karl-Heinz, 73337 Bad Überkingen (DE); Härringer, Günther, 73312 Waldhausen (DE)
(74) Vertreter: Grünecker, Kinkeldey, Stockmair & Schwanhäusser Anwaltssozietät

(56) Entgegenhaltungen:
- EP-A- 0 224 041
- GB-A- 2 271 758
- US-A- 4 757 754
- US-A- 5 901 634
- US-A- 5 927 553
- US-A- 5 957 033

## Beschreibung

Die Erfindung bezieht sich auf ein Getränkesystem der im Oberbegriff von Anspruch 1 erläuterten Art, mit dem sowohl Schokoladengetränke als auch Kaffeegetränke ausgegeben werden können.

Auf dem Markt existieren gegenwärtig Schokoladendispenser, die als gesonderte, für sich funktionsfähige Geräte ausgebildet sind. Diese Schokoladendispenser werden beispielsweise in Restaurants oder Kantinen zusätzlich zur Kaffeemaschine aufgestellt. Diese bekannten Schokoladendispenser enthalten alle zu ihrer Funktion notwendigen Baueinheiten, insbesondere eine eigene Ausgabeeinrichtung, einen Heißwasserbereiter und eine Steuereinheit und sind demzufolge relativ aufwendig.

Weiterhin gibt es Getränkevollautomaten, die meist per Münzeinwurf in der Lage sind, die unterschiedlichsten Getränke, also beispielsweise auch Kaffee oder heiße Schokolade, zu liefern. Dieser Getränkevollautomaten haben jedoch immer nur einen einzigen Auslass, was zu Problemen in Hinblick einer unerwünschten Vermischung der verschiedenen Getränke führen kann. Darüber hinaus ist es oft nicht unbedingt notwendig, Zubereitungsmöglichkeiten für alle Getränke vorzusehen.

Die EP 224 041 beschreibt einen Heißgetränkebereiter für Haushalte und für gewerbliche Zwecke mit einer Zubereitungs- und Ausgabeeinrichtung für Getränke und Getränkegrundstoffe, wie beispielsweise Kaffee, Tee, Heißwasser und Dampf. Die Zubereitungs- und Ausgabeeinrichtung steht über eine Vielzahl von Leitungen mit einer Auslassleitung eines Kaltwasserreservoirs in Verbindung. In der Vielzahl von Leitungen ist jeweils eine Durchlaufheizung vorgesehen, die das Wasser bei Bedarf er wärmt. Der Kaltwasserspeicher und die Zubereitungs- und Ausgabevorrichtung bilden zusammen ein einziges Gerät ohne Anschlussmöglichkeit für einen Schokoladendispenser.

Die US-PS 5 927 553 beschreibt eine Getränkezubereitungsmaschine, mit der unter anderem auch heiße Schokolade herstellbar ist. Die Maschine enthält ein Gehäuse mit einem eigenen Heißwassertank, der über eine Kaltwasserleitung mit Frischwasser versorgt wird.

Die im Oberbegriff des Anspruchs 1 berückrichtigte US-A-5 901 634 oder die GB-A-2 271 758 beschreiben Getränkebrühmaschinen mit einer Heißwassereinheit und einer Zubereitungs- und Ausgabeeinrichtung, wobei der Zubereitungs- und Ausgabeeinrichtung eine Vielzahl von Heißwasserleitungen zur Heißwassereinheit zugeordnet sind. Eine weitere Heißwasserleitung zur Versorgung eines externen Schokoladendispensers ist jedoch nicht vorhanden.

Der Erfindung liegt somit die Aufgabe zugrunde, ein Getränkesystem bereitzustellen, das einfach im Aufbau und preisgünstig in der Herstellung und der Wartung ist.

Die Aufgabe wird durch das in Anspruch 1 angegebene Getränkesystem und den Schokoladendispenser des Anpruchs 5 gelöst.

Das erfindungsgemäße Getränkesystem erlaubt die Zuordnung eines Schokoladendispensers mit eigener Ausgabeeinrichtung zu einer Kaffeemaschine, wobei der Schokoladendispenser zum einen nur dann zugeordnet werden muss, wenn tatsächlich ein Schokoladengetränk ausgegeben werden soll und zum anderen konstruktiv wesentlich einfacher als herkömmliche Schokoladendispenser aufgebaut ist Durch seine eigene Ausgabeeinheit wird die Ausgabegeschwindigkeit der Kaffeemaschine durch sonst notwendige Reinigungsvorgänge nicht verringert, was insbesondere im Restaurant- oder Kantinenbetrieb von sehr großem Vorteil ist.

Vorteilhafte Weiterbildungen der Erfindung sind den Unteransprüchen zu entnehmen.

Von besonderem Vorteil ist die gemeinsame Benutzung der Steuereinheit der Kaffeemaschine gemäß Anspruch 2 auch für den Schokoladendispenser, da dadurch die Konstruktion beispielsweise durch Wegfall eines eigenen Stromanschlusses für den Schokoladendispenser weiter vereinfacht werden kann.

Trotzdem kann es zweckmäßig sein, gemäß Anspruch 3 dem Schokoladendispenser ein eigenes Bedienfeld zuzuordnen, um die Bedienung zu erleichtern.

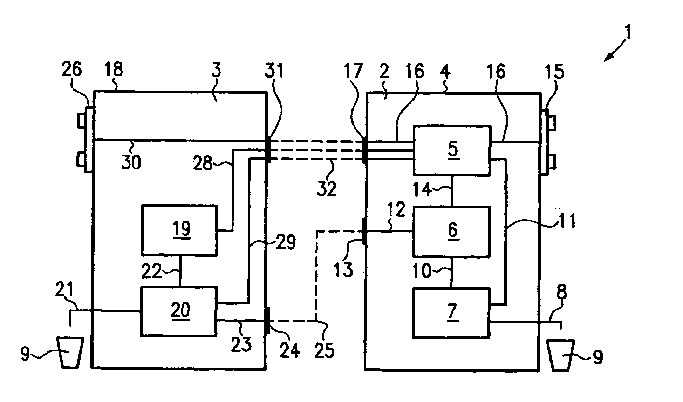

Ein Ausführungsbeispiel der Erfindung wird nachfolgend anhand der einzigen Zeichnung näher erläutert, die das von einer Kaffeemaschine erfindungsgemäß abgeleitete Getränkesystem in stark schematisierter Darstellung zeigt.

Die Fig. zeigt ein Getränkesystem 1, das aus einer Kaffeemaschine 2 und einem Schokoladendispenser 3 zusammengestellt ist. Die Kaffeemaschine 2 enthält ein Gehäuse 4, in dem eine Steuerungseinheit 5, eine Heißwassereinheit 6 und eine Zubereitungs- und Ausgabeeinrichtung 7 untergebracht sind. Die Zubereitungs- und Ausgabeeinrichtung 7 enthält die üblichen Bestandteile, also insbesondere eine Brüheinrichtung herkömmlicher Bauart, gegebenenfalls einen Kaffeemehlbehälter oder einen Kaffeebohnenbehälter mit Mahlwerk, eine Dosiereinrichtung und einen dargestellten Auslauf 8, der aus dem Gehäuse 4 herausführt, und unter den ein Konsumgefäß, dargestellt ist ein Becher 9, gestellt werden kann, der dann über den Auslauf 8 mit einem Kaffeegetränk beliebiger Art befüllt werden kann. Die Zubereitungs- und Ausgabeeinrichtung 7 steht über eine Leitung 10 mit der Heißwassereinheit 6 und eine Steuerleitung 11 mit der Steuereinheit 5 in Verbindung.

Die Heißwassereinheit 6 ist ebenfalls üblicher Bauart und kann beispielsweise einen Durchlauferhitzer oder einen Heißwasserboiler enthalten. Die Heißwassereinheit 6 steht über eine Heißwasserleitung 12 mit einem externen Anschluss 13 in Verbindung, der außerhalb des Gehäuses 4 der Kaffeemaschine 2 zugänglich ist. Weiterhin steht die Heißwassereinheit 6 über eine Steuerleitung 14 mit der Steuereinheit 5 in Verbindung.

An der Außenseite des Gehäuses 4 ist ein übliches Bedienfeld 15 vorgesehen, das die üblichen Knöpfe, Drucktasten oder Kontaktfelder und Anzeigen aufweist, wie dies für die Bedienungsfelder üblicher Kaffeemaschinen bekannt ist. Das Bedienfeld 15 steht über eine Steuerleitung 16 mit der Steuereinheit 5 in Verbindung. Weiterhin steht die Steuereinheit 5 über ein insgesamt mit 16 bezeichnetes Steuerungskabel mit einem externen Anschluss 17 in Verbindung, der von der Außenseite des Gehäuses 4 zugänglich ist.

Der Schokoladendispenser 3 enthält ein Gehäuse 18, in dem ein üblicher Kakaopulverbehälter 19 mit Dosiereinrichtung sowie eine Zubereitungs- und Ausgabeeinrichtung 20 für Schokoladengetränk untergebracht ist. Die Zubereitungs- und Ausgabeeinrichtung 20 steht über einen Auslass 21 mit der Außenseite des Gehäuses 18 in Verbindung, unter den ein Konsumgefäß 9, dargestellt ist wiederum ein Becher, untergestellt und befüllt werden kann.

Die Zubereitungs- und Ausgabeeinrichtung 20 enthält wiederum die üblichen Bestandteile, also beispielsweise eine Mischkammer mit motorbetriebenem Mischwerkzeug, und steht über eine Kakaoleitung 22 mit dem Kakaopulverbehälter 19 und über eine Heißwasserleitung 23 mit einem externen Anschluss 24, der von außerhalb des Gehäuses 18 zugänglich ist, in Verbindung. Der Anschluss 24 ist, insbesondere lösbar, mit dem Anschluss 13 am Gehäuse 4 der Kaffeemaschine 2 so verbunden, dass eine Fließverbindung von der Heißwassereinheit 6 über die Heißwasserleitung 12 der Kaffeemaschine 2 in die Heißwasserleitung 23 und die Zubereitungs- und Ausgabeeinrichtung 20 des Schokoladendispensers 3 besteht. Dies kann beispielsweise durch eine direkte Verbindung der beiden Anschlüsse 13 und 24 oder durch die in der Fig. gestrichelt gezeichnete Verbindungsleitung 25 geschehen.

An der Außenseite des Gehäuses 18 des Schokoladendispensers 3 ist ein Bedienfeld 26 angeordnet, das die üblichen Bedien- und Anzeigeelemente aufweist, die zum Betrieb eines Schokoladendispensers 3 erforderlich oder vorteilhaft sind.

Der Kakaovorratsbehälter 19 (insbesondere seine Dosiereinrichtung), die Zubereitungs- und Ausgabeeinrichtung 20 und das Bedienfeld 26 stehen über jeweils eine Steuerleitung 28, 29 und 30 mit einem externen Anschluss 31, der von der Außenseite des Gehäuses 18 des Schokoladendispensers 3 zugänglich ist, in Verbindung. Dieser Anschluss 31 ist entweder direkt oder über eine gestrichelt gezeichnete Verbindungsleitung 32 an den Anschluss 17 am Gehäuse 4 der Kaffeemaschine 2 anschließbar. Im dargestellten Ausführungsbeispiel sind die Steuerungsleitungen über jeweils einen gemeinsamen Anschluss 17, 31 geführt, es ist jedoch möglich, für jede Steuerungsleitung einen eigenen Anschluss vorzusehen.

Das erfindungsgemäße Getränkesystem 1 arbeitet wie folgt. Bei Vorwahl eines Kaffeegetränks über das Bedienfeld 15 arbeitet die Kaffeemaschine 2 wie jede anderen Kaffeemaschine auch. Wird über das Bedienfeld 26 ein Schokoladengetränk (Kakaogetränk) vorgewählt, so werden die Befehle vom Bedienfeld 26 ebenfalls an die Steuereinheit 5 der Kaffeemaschine 2 geleitet, die dann über nicht gezeigte Steuerelemente, wie Schalter, Ventile oder dgl., den Betrieb auch des Schokoladendispensers 3 übernimmt, d.h. die Dosiereinrichtung des Kakaobehälters 19 betätigt, um eine vorbestimmte Menge Kakaopulver über die Leitung 22 in die Zubereitungs- und Ausgabeeinrichtung 20 einzuleiten, die Heißwassereinheit 6 mit der Zubereitungs- und Ausgabeeinheit 20 verbindet, die Mischeinrichtung der Zubereitungs- und Ausgabeeinheit 20 in Gang setzt und schließlich den Auslauf 21 zum Ausgeben des Schokoladengetränks öffnet und anschließend wieder schließt.

In Abwandlung des beschriebenen und gezeichneten Ausführungsbeispiels ist es unter Umständen auch ausreichend, wenn Kaffeemaschine und Schokoladendispenser nur die Heißwassereinheit gemeinsam benutzen, da die Steuerung des Schokoladendispenser nicht sehr aufwendig ist. Darüber hinaus ist es jedoch auch möglich, das Bedienfeld des Schokoladendispensers in das Bedienfeld für die Kaffeemaschine mit zu integrieren. Der Schokoladendispenser sollte über seine Anschlüsse bevorzugt lösbar mit der Kaffeemaschine verbunden sein, um Kaffeemaschine und Schokoladendispenser getrennt transportieren zu können und gegebenenfalls durch unterschiedlich lange Verbindungsleitungen eine Anpassung an die räumlichen Gegebenheiten beim Benutzer vornehmen zu können. Es ist jedoch auch möglich, Schokoladendispenser und Kaffeemaschinen bei ihrer Erstinstallation permanent miteinander zu verbinden.

Der Schokoladendispenser mit den äußeren Anschlüssen und die Kaffeemaschine mit den äußeren Anschlüssen können getrennt voneinander verkauft werden, so dass der Kunde eine bereits vorhandene Kaffeemaschine nachträglich mit einem Schokoladendispenser nachrüsten kann, wenn zusätzlich auch ein Schokoladen- oder Kakaogetränk bereitgestellt werden soll. Die Kaffeemaschine ist bevorzugt programmgesteuert, so dass sie zum Betrieb des Schokoladendispensers durch eine zusätzliche Software problemlos nachgerüstet werden kann.

## Patentansprüche

1. Getränkesystem (1) zum Zubereiten und Ausgeben von Kaffeegetränk und Schokoladengetränk, mit einer Kaffeemaschine (2) und einem Schokoladendispenser (3), wobei die Kaffeemaschine (2) ein Gehäuse (4) mit einer Heißwassereinheit (6), einer Steuerungseinheit (5) und einer Zubereitungs- und Ausgabeeinrichtung (7) für das Kaffeegetränk enthält, die Zubereitungs- und Ausgabeeinrichtung (7) über eine Leitung (10) mit der Heißwassereinheit (6) verbunden ist, und eine weitere Leitung (12) von der Heißwassereinheit (6) zu einer Anschlusseinrichtung (13) am Gehäuse (4) führt, **dadurch gekennzeichnet, daß** der Schokoladendispenser (3) separat von der Kaffeemaschine (2) ausgebildet ist und ein Gehäuse (18) mit einer Zubereitungs- und Ausgabeeinrichtung (20) für das Schokoladengetränk, keine Heißwassereinheit, jedoch eine Anschlusseinrichtung (24) für eine Einlass-Heißwasserleitung (23) enthält, wobei das Gehäuse (4) der Kaffeemaschine (2) und das Gehäuse (18) des Schokoladendispensers (3) über die Anschlusseinrichtung (13, 24) so miteinander verbunden sind, dass der Schokoladendispenser (3) durch die Heißwassereinheit (6) der Kaffeemaschine (2) mit Heißwasser versorgt wird.

2. Getränkesystem nach Anspruch 1, **dadurch gekennzeichnet, dass** das Gehäuse (4) der Kaffeemaschine (2) und das Gehäuse (18) des Schokoladendispensers (3) über eine Anschlusseinrichtung (17, 31) für eine Steuerleitung (16, 28, 29, 30, 32) so miteinander verbunden sind, dass die Zubereitungs- und Ausgabeeinrichtung (20) des Schokoladendispensers (3) durch die Steuereinheit (5) der Kaffeemaschine (2) gesteuert wird.

3. Getränkesystem nach Anspruch 1 oder 2, **dadurch gekennzeichnet, dass** das Gehäuse (18) des Schokoladendispensers (3) mit einem Bedienungsfeld (26) zum Einleiten eines Zubereitungs- und Ausgabevorgangs für das Schokoladengetränk versehen ist.

4. Getränkesystem nach einem der Ansprüche 1 bis 3, **dadurch gekennzeichnet, dass** im Gehäuse (18) des Schokoladendispensers (3) ein Kakaopulverbehälter (19) untergebracht ist.

5. Schokoladendispenser (3) für das Getränkesystem (1) nach einem der Ansprüche 1 bis 4, mit einem Gehäuse (18), das eine Zubereitungs- und Ausgabeeinrichtung (20) für das Schokoladengetränk, keine Heißwassereinheit, jedoch eine Einlass-Heißwasserleitung (23) mit einer Anschlusseinrichtung (24) enthält, zum Anschluss im Betrieb an eine Anschlusseinrichtung (13) einer Kaffeemaschine (2), so dass der Schokoladendispenser (3) durch die Heißwassereinheit (6) der Kaffeemaschine (2) mit Heißwasser versorgbar ist.

6. Schokoladendispenser nach Anspruch 5, **dadurch gekennzeichnet, dass** das Gehäuse (18) eine Anschlusseinrichtung (31) für eine Steuerleitung (28, 29, 30) enthält.

7. Schokoladendispenser nach Anspruch 5 oder 6, **dadurch gekennzeichnet, dass** das Gehäuse (18) ein Bedienungsfeld (26) zum Einleiten eines Zubereitungs- und Ausgabevorgangs für das Schokoladengetränk enthält.

8. Schokoladendispenser nach einem der Ansprüche 5 bis 7, **dadurch gekennzeichnet, dass** im Gehäuse (18) ein Kakaopulvertbehälter (19) untergebracht ist.

## Claims

1. Beverage apparatus (1) for preparing and dispensing coffee beverages and chocolate beverages, comprising a coffee machine (2) and a chocolate dispenser (3), the coffee machine (2) comprising a housing (4) having a hot-water unit (6), a control unit (5) and a preparation and dispensing device (7) for coffee beverages, the preparation and dispensing device (7) being connected to the hot-water unit (6) via a line (10) and a further line (12) leading from the hot-water unit (6) to a connection device (13) on the housing (4), **characterised in that** the chocolate dispenser (3) is formed separately from the coffee machine (2) and comprises a housing (18) having a preparation and dispensing device (20) for chocolate beverages, no hot-water unit, but a connection device (24) for an inlet hot-water line (23), the housing (4) of the coffee machine (2) and the housing (18) of the chocolate dispenser (3) being interconnected via the connection device (13, 24) in such a way that the chocolate dispenser (3) is supplied with hot water by the hot-water unit (6) of the coffee machine (2).

2. Beverage apparatus according to claim 1, **characterised in that** the housing (4) of the coffee machine (2) and the housing (18) of the chocolate dispenser (3) are interconnected via a connection device (17, 31) for a control line (16, 28, 29, 30, 32) in such a way that the preparation and dispensing device (20) of the chocolate dispenser (3) is controlled by the control unit (5) of the coffee machine (2).

3. Beverage apparatus according to either claim 1 or claim 2, **characterised in that** the housing (18) of the chocolate dispenser (3) is provided with a control panel (26) for initiating a preparation and dispensing process for chocolate beverages.

4. Beverage apparatus according to any one of claims 1 to 3, **characterised in that** a cocoa powder container (19) is accommodated in the housing (18) of the chocolate dispenser (3).

5. Chocolate dispenser (3) for the beverage apparatus (1) according to any one of claims 1 to 4, comprising a housing (18) which comprises a preparation and dispensing device (20) for chocolate drinks, no hot-water unit, but an inlet hot-water line (23) having a connection device (24) for connecting to a connection device (13) of a coffee machine (2) during operation, in such a way that the chocolate dispenser (3) can be supplied with hot water by the hot-water unit (6) of the coffee machine (2).

6. Chocolate dispenser according to claim 5, **characterised in that** the housing (18) comprises a connection device (31) for a control line (28, 29, 30).

7. Chocolate dispenser according to either claim 5 or claim 6, **characterised in that** the housing (18) comprises a control panel (26) for initiating a preparation and dispensing process for chocolate drinks.

8. Chocolate dispenser according to any one of claims 5 to 7, **characterised in that** a cocoa powder container (19) is accommodated in the housing (18).

## Revendications

1. Système pour boissons (1) pour préparer et distribuer des boissons au café et des boissons au chocolat, avec une machine à café (2) et un distributeur de chocolat (3), étant précisé que la machine à café (2) contient une enveloppe (4) pourvue d'une unité d'eau chaude (6), d'une unité de commande (5) et d'un dispositif de préparation et de distribution (7) pour la boisson au café, que le dispositif de préparation et de distribution (7) est relié à l'unité d'eau chaude (6) par une conduite (10), et qu'une autre conduite (12) va de l'unité d'eau chaude (6) à un dispositif de raccordement (13) prévu sur l'enveloppe (4),
**caractérisé en ce que** le distributeur de chocolat (3) est formé séparément par rapport à la machine à café (2) et contient une enveloppe (18) avec un dispositif de préparation et de distribution (20) pour la boisson au chocolat et ne contient pas d'unité d'eau chaude, mais un dispositif de raccordement (24) pour une conduite d'amenée d'eau chaude (23), étant précisé que l'enveloppe (4) de la machine à café (2) et l'enveloppe (18) du distributeur de chocolat (3) sont reliées par le dispositif de raccordement (13, 24) de telle sorte que le distributeur de chocolat (3) soit alimenté en eau chaude par l'unité d'eau chaude (6) de la machine à café (2).

2. Système pour boissons selon la revendication 1, **caractérisé en ce que** l'enveloppe (4) de la machine à café (2) et l'enveloppe (18) du distributeur de chocolat (3) sont reliées par un dispositif de raccordement (17, 31) pour une ligne de commande (16, 28, 29, 30, 32) de telle sorte que le dispositif de préparation et de distribution (20) du distributeur de chocolat (3) soit commandé par l'unité de commande (5) de la machine à café (2).

3. Système pour boissons selon la revendication 1 ou 2, **caractérisé en ce que** l'enveloppe (18) du distributeur de chocolat (3) est pourvue d'un panneau de commande (26) pour déclencher une opération de préparation et de distribution pour la boisson au chocolat.

4. Système pour boissons selon l'une des revendications 1 à 3, **caractérisé en ce qu'**un récipient de cacao en poudre (19) est logé dans l'enveloppe (18) du distributeur de chocolat (3).

5. Distributeur de chocolat (3) pour le système pour boissons (1) selon l'une des revendications 1 à 4, avec une enveloppe (18) qui contient un dispositif de préparation et de distribution (20) pour la boisson au chocolat et qui ne contient pas d'unité d'eau chaude mais une conduite d'amenée d'eau chaude (23) avec un dispositif de raccordement (24) à raccorder, en fonctionnement, à un dispositif de raccordement (13) d'une machine à café (2), de sorte que le distributeur de chocolat (3) est apte à être alimenté en eau chaude par l'unité d'eau chaude (6) de la machine à café (2).

6. Distributeur de chocolat selon la revendication 5, **caractérisé en ce que** l'enveloppe (18) contient un dispositif de raccordement (31) pour une ligne de commande (28, 29, 30).

7. Distributeur de chocolat selon la revendication 5 ou 6, **caractérisé en ce que** l'enveloppe (18) contient un panneau de commande (26) pour déclencher une opération de préparation et de distribution pour la boisson au chocolat.

8. Distributeur de chocolat selon l'une des revendications 5 à 7, **caractérisé en ce qu'**un récipient de cacao en poudre (19) est logé dans l'enveloppe (18).
